# FASCICULE DE BREVET EUROPEEN

(11) **EP 1 191 050 B1**
(45) Date de publication et mention de la délivrance du brevet: **26.01.2005**
(21) Numéro de dépôt: 01402251.1
(22) Date de dépôt: 29.08.2001
(51) Int. Cl.: C08G 69/20, C08G 69/18

(54) **Procédé de polymérisation anionique de lactames**
Anionisches Polymerisationsverfahren von Lactamen
Anionic polymerization process of lactams

(30) Priorité: 22.09.2000 FR 0012084
(43) Date de publication de la demande: 27.03.2002
(73) Titulaire: ARKEMA, 92800 Puteaux (FR)
(72) Inventeur: Hoogen, Nicola, 80796 München (DE); Wollny, Andreas, 79108 Freiburg (DE); Faulhammer, Heike, 27470 Serquigny (FR); Muelhaupt, Rolf, 79117 Freiburg (DE)
(74) Mandataire: Neel, Henry

(56) Documents cités:
- EP-A- 0 786 485
- EP-A- 0 872 508
- US-A- 5 895 808

## Description

La présente invention concerne un procédé de polymérisation anionique de lactames. La production de polyamide par voie anionique consiste à ajouter dans un lactame un système catalytique puis à chauffer pour obtenir en quelques minutes le polyamide. Le système catalytique est constitué d'un catalyseur tel qu'une base forte capable de former un lactamate et d'un activateur (parfois appelé régulateur) tel qu'un bis amide. A titre d'exemple de base forte on peut citer le sodium et l'hydrure de sodium, à titre d'exemple de régulateur on peut citer l'éthylène bis stéaramide (EBS) et l'éthylène bis oléamide. On peut aussi ajouter dans le lactame, avant sa polymérisation et en plus du système catalytique, une charge telle que des fibres de verre. On obtient ainsi directement un matériau renforcé. La présente invention concerne le système catalytique et plus particulièrement la façon de le préparer, de le conserver et de l'utiliser pour provoquer la polymérisation du lactame.

### [L'art antérieur et le problème technique]

La demande FR 2 291 231 décrit la polymérisation des lactames en présence d'un système catalytique constitué (i) d'un produit choisi parmi le sodium, le potassium, les hydrures et les hydroxydes de métaux alcalins et (ii) d'un produit choisi parmi les isocyanates organiques, les urées, les amides, et les chlorures d'acides. L'exemple ne décrit que l'usage de l'hydrure de sodium et d'un promoteur sans en préciser le nom. L'extrudeuse est alimentée par le mélange de lactame d'hydrure et de promoteur à 170°C l'extrudeuse étant à 250°C. Il n'est rien écrit ou suggéré sur un stockage de cette solution de composition inconnue et encore moins sur sa stabilité. Selon cette technique il est nécessaire d'ajouter le système catalytique dans le lactame juste avant la polymérisation.

L'ouvrage BOOK OF ABSTRACTS 212 ACS meeting (1996) au chapitre 19 pages 255 à 266 publié en 1998 par l'American Chemical Society décrit la polymérisation du caprolactame en présence de lactamate et de N-acyllactames. Les deux composants du système catalytique sont mélangés avec un flux de lactame et ces flux sont mis en contact dans le réacteur de polymérisation soit en batch, soit en continu. Ce procédé est en théorie plus souple que le précédent puisque chacune des solutions de lactame ne , contenant pas un système catalytique complet ne peut pas polymeriser tant qu'elles ne sont pas mélangées. Par contre ce procédé a comme inconvénient qu'il est nécessaire de doser précisément ces deux flux du mélange réactionnel afin d'obtenir les bonnes proportions de catalyseur et d'activateur et ainsi obtenir un polyamide avec les caractéristiques souhaitées. Il est nécessaire de bien mélanger les deux flux pour que le catalyseur et l'activateur soient bien repartis dans le lactame mais la polymérisation commence avant le réacteur.

Le brevet EP 231381 décrit la préparation d'objets en polyamide renforcés par des fibres de carbone dans lequel on dispose les fibres de carbone dans un moule puis on introduit dans ce moule deux flux de lactame. L'un des flux contient un catalyseur, l'autre contient le régulateur. Le brevet EP 491043 décrit un technique semblable. Ces deux brevets européens décrivent des techniques similaires à ce qui est décrit dans l'ouvrage publié par l'ACS cité plus haut.

Le brevet EP 786 482 décrit la polymérisation de lactames à l'aide d'un système catalytique liquide qu'on ajoute à raison de 3 à 10 parties dans 100 parties de lactame à polymériser. Ce système catalytique est constitué d'une N-alkyl-2-pyrrolidone, de caprolactame, d'un lactamate de sodium et d'un diisocyanate bloqué par un lactame. La température de ce système catalytique ne doit pas dépasser 70°C, puis on l'ajoute dans le lactame et on chauffe. Par exemple il provoque la polymérisation du lactame 12 dès 175°C.

Le brevet EP 786485 décrit un procédé similaire mais la N-alkyl-2-pyrrolidone peut être en tout ou partie remplacée par une urée substituée telle que la N,N'-dimethylpropylene urée.

Le brevet EP 872508 décrit la polymérisation de lactames à l'aide d'un système catalytique liquide qu'on ajoute à raison de 3 à 7 parties dans 100 parties de lactame à polymériser. Ce système catalytique est constitué d'un solvant tel que la dimethylpropylene urée, de caprolactame, de methylate de sodium, et soit d'un diisocyanate bloqué par un lactame soit de cyclohexylcarbodiimide. Cette solution catalytique doit ensuite être refroidie à température ambiante puis on l'ajoute dans le lactame et on chauffe pour provoquer la polymérisation du lactame.

Les procédés décrits dans ces trois précédents brevets européens ont l'inconvénient d'introduire des impuretés dans le lactame et donc dans le polyamide. Les systèmes catalytiques décrits provoquent la polymérisation du lactame 12 dès 175°C ce qui ne permet pas une bonne imprégnation des fibres quand on polymérise en présence de fibres de verre puisque la viscosité augmente trop vite. De plus les solutions du système catalytique décrites ne sont pas parfaitement stables.

On a maintenant trouvé un système catalytique qui est un mélange d'une base forte capable de donner un lactamate et d'un amide ou d'un bisamide en solution dans le lactame. S'agissant par exemple du lactame 12 cette solution est stable 24 heures à 160°C. Cette solution peut contenir les quantités suffisantes de catalyseur et d'activateur pour provoquer sa polymérisation dès qu'on la chauffe à une température suffisante, par exemple pour le lactame 12 il suffit de chauffer entre 200 et 350 °C de préférence entre 230 et 300°C pour qu'il y ait polymérisation en quelques minutes. La polymérisation du lactame 12 ne commence significativement qu'à partir de 230°C ce qui, quand on polymérise en présence de fibres de verre, laisse le temps au lactame de bien imprégner les fibres de verre. Cette solution peut aussi contenir beaucoup plus de catalyseur et d'activateur qu'il n'est nécessaire pour polymériser le lactame dans lequel ils sont dissous c'est donc un mélange maître qu'on ajoute à du lactame en quantité telle qu'il y ait des proportions suffisantes de catalyseur et d'activateur pour provoquer la polymérisation de tout le lactame. On a aussi trouvé que cette solution pouvait être refroidie à température ambiante et donc devenir solide puis ultérieurement réchauffée sans aucune perte d'activité. Le refroidissement de cette solution peut être effectué dans un dispositif tel qu'on la transforme en granulés, en poudre, en copeaux ou en pastilles. Cette transformation est particulièrement utile quand c'est un mélange maître. Cette forme de l'invention est particulièrement facile à mettre en oeuvre, il n'y a plus à faire des preparations compliquées il suffit de prendre du lactame de qualité commerciale et d'y ajouter les granulés, la poudre , les copeaux ou les pastilles qui peuvent être disponibles en sacs ou en conteneurs. On peut aussi selon les circonstances de la production de polyamide telles que disponibilité des moules ou temps de démoulage rechauffer ces granulés et disposer ainsi d'une solution stable prete à être ajoutée dans le lactame à polymériser.

### [Brève description de l'invention]

La demanderesse a maintenant, **selon un premier mode de réalisation**, mis au point un nouveau procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle,
   (a1) on refroidit la solution de l'étape (a) éventuellement jusqu'à l'état solide sous une forme pouvant être divisée,
   (a2) éventuellement on réchauffe le produit de l'étape (a1) à une température inférieure à la température de polymérisation du lactame,
   (a3) éventuellement on réchauffe le produit de l'étape (a1) et on le maintient à une température comprise entre la température de fusion du lactame et 15°C au dessus,
(b) le produit de l'une quelconque des étapes (a1), (a2) ou (a3) est introduit dans un dispositif mélangeur puis est chauffé à une température suffisante pour obtenir la polymérisation en masse du lactame.

Selon une deuxième forme de l'invention on introduit aussi dans l'étape (b) du lactame fondu ne contenant pas le mélange de catalyseur et de régulateur c'est à dire que la solution de l'étape (a) est un mélange maître, elle contient plus de catalyseur et de régulateur qu'il n'est nécessaire pour polymériser le lactame dans lequel ils sont dissous.

Selon une troisième forme de l'invention la polymérisation du lactame s'effectue en présence d'un ou plusieurs polymères (A) qu'on introduit soit dans la solution (a) soit dans le dispositif mélangeur de l'étape (b) soit dans le lactame fondu qu'on ajoute en plus selon la deuxième forme de l'invention soit selon une combinaison quelconque de ces possibilités.

Selon une quatrième forme de l'invention la polymérisation du lactame s'effectue en présence d'une ou plusieurs charges qu'on introduit soit dans la solution (a) soit dans le dispositif mélangeur de l'étape (b) soit dans le lactame fondu qu'on ajoute en plus selon la deuxième forme de l'invention soit selon une combinaison quelconque de ces possibilités. On peut aussi combiner la troisième et la quatrième forme de l'invention.

**Selon un deuxième mode de réalisation de l'invention** l'étape (b) est remplacée par l'étape (b1) dans laquelle le produit de l'une quelconque des étapes (a1), (a2) ou (a3) est introduit dans un moule puis est chauffée à une température suffisante pour obtenir la polymérisation en masse du lactame, on obtient ainsi directement un objet en polyamide (technologie dite "RIM"). Ce deuxième mode peut aussi s'effectuer selon plusieurs formes comme ci dessus.

Selon une deuxième forme du deuxième mode on ajoute du lactame fondu ne contenant ni catalyseur ni régulateur dans l'étape (b1) en plus du produit de l'une quelconque des étapes (a1), (a2) ou (a3) qui est un mélange maître, ce lactame fondu est éventuellement mélangé en ligne avec celui provenant de l'une quelconque des étapes (a1), (a2) ou (a3) avant introduction dans le moule.

Selon une troisième forme du deuxième mode la polymérisation du lactame s'effectue en présence d'un ou plusieurs polymères (A) qu'on introduit soit dans la solution de l'étape (a) soit dans le moule soit dans le lactame fondu qu'on ajoute dans la deuxième forme en plus de celui provenant de l'une quelconque des étapes (a1), (a2) ou (a3) soit encore lors du mélange en ligne dans cette deuxième forme soit une combinaison de toutes ces possibilités.

Selon une quatrième forme du deuxième mode la polymérisation du lactame s'effectue en présence d'une ou plusieurs charges qu'on introduit soit dans la solution de l'étape (a) soit dans le moule soit dans le lactame fondu qu'on ajoute dans la deuxième forme en plus de celui provenant de l'une quelconque des étapes (a1), (a2) ou (a3) soit encore lors du mélange en ligne dans cette deuxième forme soit une combinaison de toutes ces possibilités. On peut aussi combiner la troisième et la quatrième forme de l'invention.

La présente invention concerne aussi à titre de produit nouveau, dans la première et deuxième formes de son premier mode de réalisation, le produit de l'étape (a1) sous forme solide pouvant être divisée.

### [Description détaillée de l'invention]

**A titre d'exemple de lactames** on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame. L'invention est particulièrement utile pour le caprolactame et le lauryllactame.

**Le catalyseur** est une base suffisamment forte pour créer un lactamate. A titre d'exemple de catalyseur on peut citer le sodium, le potassium, les hydrures et les hydroxydes de métaux alcalins, les alcoolates de métaux alcalins tels que le méthylate ou l'éthylate de sodium. On ne sortirait pas du cadre de l'invention en remplaçant en tout ou partie le catalyseur par un lactamate déjà formé. Si on veut polymériser du lauryllactame on utilise avantageusement un caprolactamate ou lauryllactamate.

**S'agissant du régulateur** et des radicaux R1, R2, R3 des exemples de radicaux aryles peuvent être le phényle, le para-tolyle, l'alpha-naphtyle. Des exemples d' alkyles peuvent être de radicaux méthyle, éthyle, n-propyle, et n-butyle, et un exemple d'un radical cycloalkyle est le cyclohexyle.

Les amides préférés sont ceux dans lesquels R1 et R2 identiques ou différents est le phényle ou un alkyle ayant au plus 5 atomes de carbone, R1 pouvant être substitué par R3-O- et R3 étant un alkyle ayant au plus 5 atomes de carbone. On peut citer par exemple l'acétanilide, le benzanilide, le N-méthyl-acetamide, le N-éthyl-acetamide, le n-méthyl-formamide et le (4-éthoxy-phényl)acétamide. D'autres amides préférés sont les alkylènes bis amides tels que l'éthylène bis stéaramide (EBS) et l'éthylène bis oléamide.

Le rapport du catalyseur sur le régulateur, en moles, peut être compris entre 0,5 et 2 et de préférence entre 0,8 et 1,2. Pour le régulateur il s'agit du nombre de moles de groupements amides.

La proportion de catalyseur dans le lactame peut être comprise entre 0,1 et 5 moles pour 100 moles de lactame et de préférence entre 0,3 et 1,5. S'agissant de la première forme de l'invention, du premier ou du deuxième mode, ce sont ces proportions de catalyseur et de régulateur qui sont dans le lactame de l'étape (a). S'agissant de la deuxième forme de l'invention, du premier ou du deuxième mode c'est à dire si la solution de l'étape (a) est un mélange maître, les proportions dans la solution de l'étape (a) sont plus élevées mais on respecte ces proportions (0,1 à 5 pour 100 moles de lactame) par rapport à tout le lactame engagé dans la polymérisation à l'étape (b) ou (b1). Avantageusement la proportion de catalyseur dans cette solution de l'étape (a) considérée comme mélange maître est comprise entre 5 et 50 moles pour 100 moles de lactame. Quant aux autres formes de l'invention, du premier ou du deuxième mode, on respecte ces proportions (0,1 à 5 pour 100 moles de lactame) par rapport à tout le lactame engagé dans l'étape (b) ou (b1).

Le catalyseur et le régulateur sont ajoutés dans le lactame fondu préalablement déshydraté et inerté. On peut effectuer des distillations sous vide pour déshydrater le lactame, éventuellement le catalyseur et le régulateur.

Si on utilise un lactamate au lieu d'un catalyseur l'homme de métier détermine facilement ses proportions en fonction des proportions données pour le catalyseur.

Les termes "catalyseur", "activateur" et "régulateur" sont utilisés pour des raisons de clarté du texte et aussi parcequ'ils sont utilisés par tous les hommes de métier de la polymérisation anionique des lactames. Dans la présente invention le catalyseur est tout produit capable de créer un lactamate, et le régulateur (ou activateur) est tout produit de la famille définie plus haut qui en plus de l'action du catalyseur provoque la polymérisation du lactame.

**L'étape (a1)** consiste à refroidir par tout moyen y compris le refroidissement naturel la solution de l'étape (a). Avantageusement on met le produit sous forme divisée telle que des granulés, de la poudre, des copeaux ou des pastilles. Ces techniques sont connues en elles mêmes, on peut combiner le refroidissement et la mise sous forme divisée. A titre d'exemple on peut citer le refroidissement sur une bande transporteuse metallique en atmosphère d'azote ou une machine telle qu'une pastilleuse.

Le produit de l'étape (a1) éventuellement sous forme solide pouvant être divisée peut être introduit tel quel dans l'étape (b) mais avantageusement il est chauffé **dans l'étape (a2)** à une température inférieure à la température de polymérisation du lactame, ceci permet de réduire l'energie à fournir dans l'étape (b) ou (b1).

**La température de la solution stable de l'étape (a3)** est en général comprise entre la température de fusion et 15°C au-dessus. S'agissant du lactame 12 cette température peut être comprise entre 155 et 180°C et de préférence entre 160 et 170°C. On opère à la pression atmosphérique, il n'est pas nécessaire de compliquer les appareillages puisque la pression est sans effet sur la polymérisation.

**Dans l'étape (b) ou (b1)** le lactame, le catalyseur, le régulateur et éventuellement le polymère (A) et/ou les charges sont portés à une température suffisante pour obtenir la polymérisation en masse de tout le lactame. Plus cette température est élevée plus la réaction est rapide. Par exemple pour le lactame 12 cette température est comprise entre 200 et 350°C et de préférence entre 230 et 300°C. S'agissant du caprolactame cette température est comprise entre 200 et 350°C et de préférence entre 230 et 300°C. Il est recommandé que la température qu'on choisit pour la polymérisation soit supérieure à la température de fusion du polymère obtenu. La durée de la polymérisation est en général inférieure à 15 minutes et en général de l'ordre de 2 à 5 minutes. L'étape (b) peut s'effectuer dans tout dispositif de réacteurs continus ou discontinus utilisés pour la polymérisation à l'état fondu tel qu'un malaxeur ou une extrudeuse. L'étape (b1) est effectuée dans les dispositifs habituels de la technologie "RIM". Ces techniques sont décrites dans EP 791618, EP 231381 et dans l'ouvrage Encyclopedia of Polymer Science and Engineering **14**, pp. 72-100.

La troisième forme de l'invention, du premier ou du deuxième mode, est particulièrement utile pour préparer des mélanges (ou alliages) de polymères. En polymérisant le lactame en présence du polymère (A) on obtient un mélange beaucoup plus intime du polylactame (polyamide) et du polymère (A) que par le procédé habituel de mélange (ou malaxage) à l'état fondu du polymère (A) et du polyamide. Il en est de même dans la quatrième forme de l'invention, du premier ou du deuxième mode, ou il en résulte un meilleur contact entre le polyamide et les charges. Le polymère (A) peut être en partie solubilisé dans le lactame ou introduit dans le dispositif de l'étape (b) ou (b1) à l'état fondu ou sous forme solide finement divisée (entre 0,1 et 10 µm par exemple). On ne sortirait pas du cadre de l'invention en utilisant plusieurs polymères (A).

**A titre d'exemple de polymère (A)** on peut citer les polyoléfines éventuellement fonctionnalisées, les polyamides, le polyphenylène oxyde. S'agissant du polymère (A) qui est une polyoléfine elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (A1) et des polyoléfines non fonctionnalisées (A2).

Une polyoléfine non fonctionnalisée (A2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (A1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (A2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (A1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (A1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (A1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (A1) ou (A2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères mentionnés ci-dessus, (A1) et (A2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le lactame peut être le caprolactame ou le lauryllactame ou leur mélange, le polymère (A) peut être le PA 6 ou le PA 12. On peut utiliser toute combinaison de ces possibilités.

**A titre d'exemple de charge** dans la quatrième forme de l'invention, du premier ou du deuxième mode, on peut citer les fibres de verre ou de carbone ou bien des charges minérales telles que par exemple des billes de verre .

Les polyamides de l'invention peuvent aussi contenir des additifs tels que:
- des colorants ;
- des pigments ;
- des azurants ;
- des anti-oxydants ;
- des stabilisateurs UV.
Ces additifs pouvant être introduits au cours de la polymérisation pourvu qu'ils soient inertes vis à vis de la polymérisation anionique des lactames.

A la suite de l'étape (b) du premier mode de réalisation le polyamide obtenu peut être récupéré sous forme de granulés ou être directement transformé en objet, film, tube, profilé. On a découvert que les granulés ainsi que les objets, films, tubes, contiennent très peu de monomère résiduel par comparaison avec le procédé de l'art antérieur décrit dans les brevets EP 786485, EP 872508, EP 786482 et EP 791618. II en est de même des objets fabriqués dans l'étape (b1) du deuxième mode de réalisation de l'invention.

Dans les exemples suivants on caractérise les polyamides obtenus par leur viscosité inhérente. La viscosité inhérente (η) est mesurée par viscosimètre UBBELHODE à 25°C dans le metacresol pour 0,5 g de polymère dans 100 ml de metacresol. Ce principe est décrit dans ULLMANN'S Encyclopedia of Industrial Chemistry - Vol. A 20, p. 527 - 528 (1995 - 5e édition).

On caractérise aussi les polyamides par mesure de leur masse qu'on mesure par GPC (gel permeation chromatography) aussi appelée SEC (steric exclusion chromatography). Dans la présente demande le terme SEC désigne la mesure des masses moléculaires de polymères par chromatographie d'exclusion stérique. Cette technique, et plus particulièrement son application aux polyamides et aux polyamides blocs polyethers est décrite dans "Journal of Liquid Chromatography, 11(16), 3305-3319 (1988)".

### [Exemples]

### Exemple 1

On essaie différents régulateurs.

### Mode opératoire:

### 1. Préparation du mélange réactionnel

Le lactame 12 sodé à 25% molaire est préparé préalablement de la façon suivante:
- environ 20% d'une certaine quantité de lactame 12 sont distillés sous azote et sous vide de façon à en assurer la déshydratation.
- 25% molaires de sodium sont introduits par petites quantités dans la partie non distillé du lactame. Cette addition se fait sous balayage d'azote et sous agitation, à une température inférieure à 100°C.

### 2. Polymérisation:

Le mélange est inerté et porté à 260°C. La polymérisation débute par introduction de 1% molaire d'acétanilide.

### Résultats obtenus :

| **Régulateur** **(1% molaire) et 1% de NaH** | **Temps de polymérisation** **(Min)** | **visco.inh.** **(0.5% en poids dans le m- crésol)** |
|---|---|---|
| acétanilide | 11.87 | 1.2 |
| 4-éthoxy-phényl)acétamide | 12.27 | 1.18 |
| benzanilide | 12.6 | 1.15 |
| N-méthyl-acétamide | 12.4 | 1.24 |
| N-éthyl-acétamide | 13.41 | 1.3 |
| N-méthyl-formamide | 11.94 | 1.45 |

**Essais à 270°C**

### Mode opératoire

L'acétanilide ou le N,N' éthylène bis stéaramide, le NaH et le L12 respectivement L6 sont pesés dans un réacteur et inertés. Les mélanges réactionnels L6 et L12 sont préparés à 160 °C. Le début de la réaction se fait par chauffage à 270°C. Le temps de polymérisation donné est le temps de montée en couple :

| **Régulateur (x% molaire) et x% de NaH** par rapport au lactame | **Temps de polymérisation (Min)** | **visco.inh. (0.5 % en poids dans le m- crésol)** | **Lactame** |
|---|---|---|---|
| acétanilide (0.96/0.96) | 2-3 | 1.22 | L12 |
| éthylène bis stéaramide (0.48/0.97) | 2-3 | 1.1 | L12 |
| éthylène bis stéaramide (0.19/0.37) | 2-3 | 1.1 | L6 |
| Acétanilide: 1 fonctionnalité par mol | | | |
| EBS: 2 fonctionnalités par mol | | | |

### Exemple 2

On montre la stabilité de la solution (a) à 160°C

### A- Mélange acétanilide / NaH / L12.

### Mode opératoire (maintien à 160°C) :

L'acétanilide, le NaH et le L12 (lactame 12) sont pesés dans un réacteur inerté. Le mélange est porté et maintenu à 160°C sous atmosphère anhydre. Le taux de L12 a été évalué par chromatographie.

| durée essais stabilité 160°C. | %L12 résiduel | % molaire Par rapport au lactame acét./HNa |
|---|---|---|
| (2h) | 98.1 | 0.98 / 1.1 |
| (4h) | 96.1 | 0.95 / 1.06 |
| (7h) | 97.9 | 0.95 / 1.06 |
| (24h) | 99.2 | 0.95 / 1.06 |
| (48h) | 49.1 | 1.1 / 1.1 |

### B- Mélange N,N' éthylène bis stéaramide (EBS).

### Mode opératoire (maintient à 160°C) :

L'EBS, le NaH et le L12 (L6) sont pesés dans un réacteur inerté. Le mélange est porté et maintenu à 160°C sous atmosphère anhydre pendant 24 heures. Après 24heures le taux de L12 (L6) a été évalué.

| durée essais stabilité 160°C. | % Lactame résiduel | % molaire par rapport au Lactame EBS / HNa | Lactame |
|---|---|---|---|
| (24h) | 92 | 0.57 / 1.1 | L12 |
| (24h) | 98 | 0.55 / 1.0 | L6 |
| EBS = Ethylène bis stearamide : 2 fonctionnalités par mol | | | |

On montre maintenant la réactivité après le stockage.

### Mode opératoire: préparation de l'acétanilide sodé

Dans un ballon de 6 I à 3 tubulures muni d'une agitation puissante, d'un séparateur d'eau et contenant 41 de benzène, on verse 40g de soude finement pulvérisée. On maintient l'ébullition de façon à entraîner les trace d'eau éventuelles, puis on ajoute 135g (1 mole) d'acétanilide. L'avancement du déplacement d'équilibre est suivi par la quantité d'eau entraînée par le benzène. On récupère ainsi dans le séparateur d'eau 92 à 94% de la quantité théorique en 8 heures environ.
Le benzène est évaporé à 60°C / 20mm, puis à 60°C / 0.5 mm.
Le spectre infrarouge de l'acétanilide sodé présente une bande intense caractéristique de la structure [N-C=O]- Na+ à 1563 cm-1. II ne subsiste qu'un léger épaulement à 1665 cm-1 caractéristique du carbonyle libre de l'acétanilide. Il y a disparition de la bande NH à 3400 cm-1. On peut donc évaluer à moins de 5% la quantité d'acétanilide libre restant dans l'acétanilide sodé par cette méthode.

### Mode opératoire: Stabilité du mélange réactionnel puis sa réactivité

### Série a :

Une série de tubes contenant du lactame 12 et 1% molaire d'acétanilide sodé a été chauffé à 165°C. Le lactame 12 des échantillons a été extrait de la façon suivante: extraction de l'échantillon en Soxhlet pendant 2 heures à l'éthanol, suivie d'un étuvage pendant 16 heures à 150°C / 0.3mm

Le démarrage de la polymérisation n'a lieu qu'après 32 heures et son évolution est très lente.
2 tubes maintenus à 165°C pendant 64 heures ont été chauffés à 270°C. La polymérisation a eu lieu normalement pour conduire à un PA de visco.inh.=1.28.

### Série b :

Le mélange réactionnel en utilisant le L12 est fondu à 160°C, maintenu à cette température avec différentes durées, puis la polymérisation se fait en augmentant la température à 270°C.

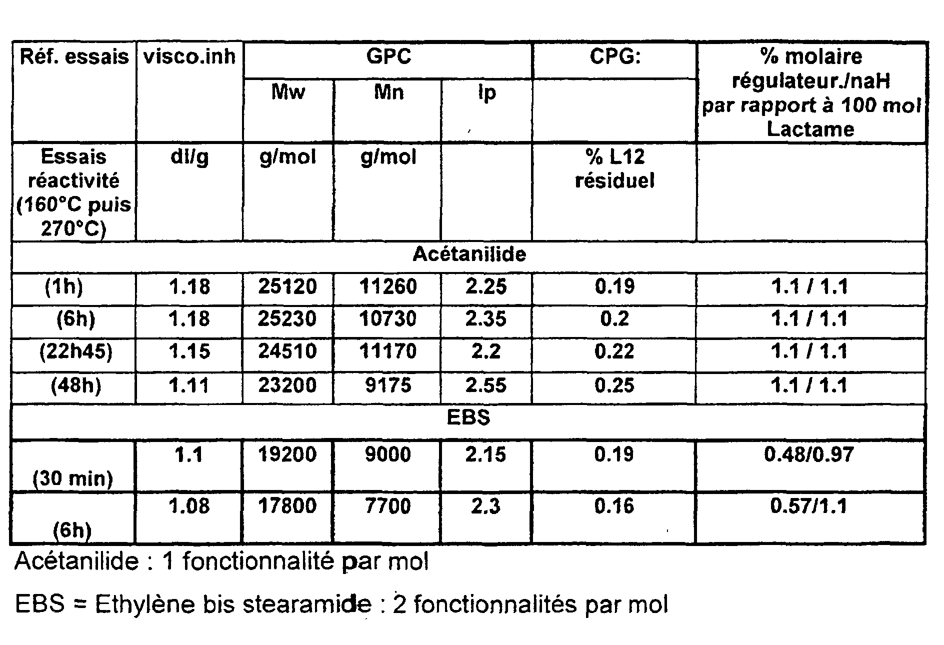

### Exemple 3 :

Finallement on va montrer la réactivité du mélange réactionnel après refroidissement à température ambiante.

### a) Préparation du mélange réactionnel :

Dans un ballon de 250 ml 48 mg (2 mmol) de NaH et 593 mg (1 mmol) d'EBS (N,N'-ethylene-bisstearamide) sont solubilisés dans 50 g de lauryllactame à 160°C sous balayage d'azote. Après homogénéisation de la solution, le mélange réactionnel est refroidi sous balayage d'azote à température ambiante. Le mélange refroidi représente un produit homogène et cristallin, qui est stockable à température ambiante. Il est recommandé de stocker ce produit à l'abri de l'humidité.

### b) Polymérisation du mélange réactionnel

Le mélange réactionnel cristallin est rechauffé à 160°C sous balayage d'azote puis versé dans un malaxeur Haake Rheocord qui est préchauffé à 270°. Le mélange est malaxé avec une vitesse d'agitation de 60 tours par minute (rpm). Après avoir atteint le maximum du couple (2 à 3 minutes) le polyamide est récupéré et refroidi (quenched) entre deux plaques métalliques. Le taux de L12 résiduel présent dans le polymère obtenu par chromatographie gas est de 2,1%, les masses moléculaires obtenus par GPC donnent une Mw de 34400 g/mol et une Mn de 16400 g/mol.

## Revendications

1. Procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle,
(a1) on refroidit la solution de l'étape (a) éventuellement jusqu'à l'état solide sous une forme pouvant être divisée,
(a2) éventuellement on réchauffe le produit de l'étape (a1) à une température inférieure à la température de polymérisation du lactame,
(a3) éventuellement on réchauffe le produit de l'étape (a1) et on le maintient à une température comprise entre la température de fusion du lactame et 15°C au dessus,
(b) le produit de l'une quelconque des étapes (a1), (a2) ou (a3) est introduit dans un dispositif mélangeur puis est chauffé à une température suffisante pour obtenir la polymérisation en masse du lactame.

2. Procédé selon la revendication 1 dans lequel le produit de l'étape (a1) est sous forme solide.

3. Procédé selon l'une quelconque des revendications précédentes dans lequel on introduit aussi dans l'étape (b) du lactame fondu ne contenant pas le mélange de catalyseur et de régulateur.

4. Procédé selon l'une quelconque des revendications précédentes dans lequel la polymérisation du lactame s'effectue en présence d'un ou plusieurs polymères (A) qu'on introduit soit dans la solution (a) soit dans le dispositif mélangeur de l'étape (b) soit dans le lactame fondu qu'on ajoute en plus de celui de (a) soit selon une combinaison quelconque de ces possibilités.

5. Procédé selon l'une quelconque des revendications précédentes dans lequel la polymérisation du lactame s'effectue en présence d'une ou plusieurs charges qu'on introduit soit dans la solution (a) soit dans le dispositif mélangeur de l'étape (b) soit dans le lactame fondu qu'on ajoute en plus de celui de (a) soit selon une combinaison quelconque de ces possibilités.

6. Procédé de polymérisation anionique de lactames dans lequel:
(a) on met en solution dans le lactame fondu (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle,
(a1) on refroidit la solution de l'étape (a) éventuellement jusqu'à l'état solide sous une forme pouvant être divisée,
(a2) éventuellement on réchauffe le produit de l'étape (a1) à une température inférieure à la température de polymérisation du lactame,
(a3) éventuellement on réchauffe le produit de l'étape (a1) et on le maintient à une température comprise entre la température de fusion du lactame et 15°C au dessus,
(b1) le produit de l'une quelconque des étapes (a1), (a2) ou (a3) est introduit dans un moule puis est chauffée à une température suffisante pour obtenir la polymérisation en masse du lactame.

7. Procédé selon la revendication 6 dans lequel on ajoute du lactame fondu ne contenant ni catalyseur ni régulateur dans l'étape (b1) en plus de celui de l'une quelconque des étapes (a1), (a2) ou (a3) et ce lactame fondu est éventuellement mélangé en ligne avec celui provenant de l'une quelconque des étapes (a1), (a2) ou (a3) avant introduction dans le moule.

8. Procédé selon la revendication 6 ou 7 dans lequel la polymérisation du lactame s'effectue en présence d'un ou plusieurs polymères (A) qu'on introduit soit dans la solution de l'étape (a) soit dans le moule soit dans le lactame fondu qu'on ajoute en plus de celui provenant de l'une quelconque des étapes (a1), (a2) ou (a3) soit encore lors du mélange en ligne du lactame provenant de l'une quelconque des étapes (a1), (a2) ou (a3) et du lactame ajouté en plus de celui de (a) soit une combinaison de toutes ces possibilités.

9. Procédé selon l'une quelconque des revendications 6 à 8 dans lequel la polymérisation du lactame s'effectue en présence d'une ou plusieurs charges qu'on introduit soit dans la solution de l'étape (a) soit dans le moule soit dans le lactame fondu qu'on ajoute en plus de celui provenant de l'une quelconque des étapes (a1), (a2) ou (a3) soit encore lors du mélange en ligne du lactame provenant de l'une quelconque des étapes (a1), (a2) ou (a3) et du lactame ajouté en plus de celui provenant de l'une quelconque des étapes (a1), (a2) ou (a3) soit une combinaison de toutes ces possibilités.

10. Procédé selon l'une quelconque des revendications précédentes dans lequel le catalyseur est choisi parmi le sodium, le potassium, les hydrures et les hydroxydes de métaux alcalins, les alcoolates de métaux alcalins tels que le méthylate ou l'éthylate de sodium.

11. Procédé selon l'une quelconque des revendications précédentes dans lequel le régulateur est choisi parmi l'acétanilide, le benzanilide, le N-méthyl-acetamide, le N-éthyl-acetamide, le n-méthyl-formamide, le (4-éthoxy-phényl)acétamide et les alkylènes bis amides tels que l'éthylène bis stéaramide (EBS) et l'éthylène bis oléamide.

12. Procédé selon l'une quelconque des revendications précédentes dans lequel le rapport du catalyseur sur le régulateur, en moles, est compris entre 0,5 et 2 et de préférence entre 0,8 et 1,2 ; le nombre de moles de régulateur étant exprimé en nombre de moles de groupements amides.

13. Procédé selon l'une quelconque des revendications précédentes dans lequel la proportion de catalyseur dans le lactame à l'étape (b1) est comprise entre 0,1 et 5 moles pour 100 moles de lactame et de préférence entre 0,3 et 1,5.

14. Procédé selon l'une quelconque de revendications précédentes dans lequel le lactame est le lauryllactame, la température de l'étape (a3) est comprise entre 155 et 180°C et de préférence entre 160 et 170°C, la température de l'étape (b) ou (b1) est comprise entre 200 et 350°C et de préférence entre 230 et 300°C.

15. Procédé selon l'une quelconque des revendications précédentes dans lequel le catalyseur est remplacé en tout ou partie par un lactamate.

16. Lactame sous forme solide
• contenant (i) un catalyseur capable de créer un lactamate et (ii) un régulateur choisi parmi les amides de formule R1-NH-CO-R2 dans laquelle R1 peut être substitué par un radical R3-CO-NH- ou R3-O- et dans laquelle R1, R2, R3 désignent un radical aryle, alkyle ou cycloalkyle,
• cette forme solide pouvant être divisée.

17. Lactame selon la revendication 16 dans lequel le catalyseur est remplacé en tout ou partie par un lactamate.

## Claims

1. Process for the anionic polymerization of lactams, in which:
(a) (i) a catalyst capable of creating a lactamate and (ii) a regulator chosen from amides of formula R1-NH-CO--R2, in which R1 can be substituted by an R3-CO-NH- or R3-O- radical and in which R1, R2 and R3 denote an aryl, alkyl or cycloalkyl radical, are dissolved in the molten lactam,
(a1) the solution from stage (a) is cooled, optionally to the solid state in a form which can be divided,
(a2) the product from stage (a1) is optionally reheated to a temperature below the polymerization temperature of the lactam,
(a3) optionally, the product from stage (a1) is reheated and is maintained at a temperature between the melting temperature of the lactam and 15°C above,
(b) the product from any one of stages (a1), (a2) or (a3) is introduced into a mixing device and is then heated to a temperature sufficient to obtain the bulk polymerization of the lactam.

2. Process according to Claim 1, in which the product from stage (a1) is in the solid form.

3. Process according to either one of the preceding claims, in which molten lactam not comprising the mixture of catalyst and of regulator is also introduced in stage (b).

4. Process according to any one of the preceding claims, in which the polymerization of the lactam is carried out in the presence of one or more polymers (A) which is/are introduced either into the solution (a) or into the mixing device of stage (b) or into the molten lactam which is added in addition to that of (a) or according to any combination of these possibilities.

5. Process according to any one of the preceding claims, in which the polymerization of the lactam is carried out in the presence of one or more fillers which is/are introduced either into the solution (a) or into the mixing device of stage (b) or into the molten lactam which is added in addition to that of (a) or according to any combination of these possibilities.

6. Process for the anionic polymerization of lactams, in which:
(a) (i) a catalyst capable of creating a lactamate and (ii) a regulator chosen from amides of formula R1-NH-CO-R2, in which R1 can be substituted by an R3-CO-NH- or R3-O- radical and in which R1, R2 and R3 denote an aryl, alkyl or cycloalkyl radical, are dissolved in the molten lactam,
(a1) the solution from stage (a) is cooled, optionally to the solid state in a form which can be divided,
(a2) the product from stage (a1) is optionally reheated to a temperature below the polymerization temperature of the lactam,
(a3) optionally, the product from stage a1) is reheated and is maintained at a temperature between the melting temperature of the lactam and 15°C above,
(b1) the product from any one of stages (a1), (a2) or (a3) is introduced into a mould and is then heated to a temperature sufficient to obtain the bulk polymerization of the lactam.

7. Process according to Claim 6, in which molten lactam comprising neither catalyst nor regulator is added in stage (b1), in addition to that from any one of stages (a1), (a2) or (a3), and this molten lactam is optionally blended in line with that originating from any one of stages (a1), (a2) or (a3), before introduction into the mould.

8. Process according to Claim 6 or 7 in which the polymerization of the lactam is carried out in the presence of one or more polymers (A) which is/are introduced either into the solution from stage (a) or into the mould or into the molten lactam which is added in addition to that originating from any one of stages (a1), (a2) or (a3) or alternatively during the in line blending of the lactam originating from any one of stages (a1), (a2) or (a3) and of the lactam added in addition to that of (a) or a combination of all these possibilities.

9. Process according to any one of Claims 6 to 8, in which the polymerization of the lactam is carried out in the presence of one or more fillers which is/are introduced either into the solution from stage (a) or into the mould or into the moltent lactam which is added in addition to that originating from any one of stages (a1), (a2) or (a3) or alternatively during the in line blending of the lactam originating from any one of stages (a1), (a2) or (a3) and of the lactam added in addition to that originating from any one of stages (a1), (a2) or (a3) or a combination of all these possibilities.

10. Process according to any one of the preceding claims, in which the catalyst is chosen from sodium, potassium, alkali metal hydrides, alkali metal hydroxides or alkali metal alkoxides, such as sodium methoxide or ethoxide.

11. Process according to any one of the preceding claims, in which the regulator is chosen from acetanilide, benzanilide, N-methylacetamide, N-ethylacetamide, N-methylformamide, (4-ethoxyphenyl)acetamide and alkylenebisamides, such as ethylenebisstearamide (EBS) and ethylenebisoleamide.

12. Process according to any one of the preceding claims, in which the ratio of the catalyst to the regulator, in moles, is between 0.5 and 2 and preferably between 0.8 and 1.2, the number of moles of regulator being expressed as the number of moles of amide groups.

13. Process according to any one of the preceding claims, in which the proportion of catalyst in the lactam in stage (b1) is between 0.1 and 5 mol per 100 mol of lactam and preferably between 0.3 and 1.5.

14. Process according to any one of the preceding claims, in which the lactam is lauryllactam, the temperature of stage (a3) is between 155 and 180°C and preferably between 160 and 170°C, and the temperature of stage (b) or (b1) is between 200 and 350°C and preferably between 230 and 300°C.

15. Process according to any one of the preceding claims, in which the catalyst is replaced in all or part by a lactamate.

16. Lactam in the solid form
• comprising (i) a catalyst capable of creating a lactamate and (ii) a regulator chosen from amides of formula R1-NH-CO-R2, in which R1 can be substituted by an R3-CO-NH- or R3-O- radical and in which R1, R2 and R3 denote an aryl, alkyl or cycloalkyl radical,
• it being possible for this solid form to be divided.

17. Lactam according to Claim 16, in which the catalyst is replaced in all or part by a lactamate.

## Patentansprüche

1. Verfahren zur anionischen Polymerisation von Lactamen, bei dem man:
(a) in dem schmelzflüssigen Lactam (i) einen zur Bildung eines Lactamats befähigten Katalysator und (ii) einen unter Amiden der Formel R1-NH-CO-R2, worin R1 durch einen R3-CO-NH- oder R3-O-Rest substituiert sein kann und R1, R2, R3 für einen Aryl-, Alkyl- oder Cycloalkylrest stehen, ausgewählten Regler löst,
(a1) die Lösung aus Schritt (a) abkühlt, gegebenenfalls bis zum festen Zustand in teilbarer Form,
(a2) das Produkt aus Schritt (a1) gegebenenfalls wieder auf eine unter der Polymerisationstemperatur des Lactams liegende Temperatur erhitzt;
(a3) das Produkt aus Schritt (a1) gegebenenfalls wieder erhitzt und bei einer zwischen der Schmelztemperatur des Lactams und 15°C darüber liegenden Temperatur hält,
(b) das Produkt aus einem der Schritte (a1), (a2) oder (a3) in eine Mischvorrichtung einträgt und dann auf eine für die Massepolymerisation des Lactams ausreichende Temperatur erhitzt.

2. Verfahren nach Anspruch 1, bei dem das Produkt aus Schritt (a1) in fester Form vorliegt.

3. Verfahren nach einem der vorhergehenden Ansprüche, bei dem man in Schritt (b) auch schmelzflüssiges Lactam ohne die Mischung aus Katalysator und Regler einträgt.

4. Verfahren nach einem der vorhergehenden Ansprüche, bei dem man die Polymerisation des Lactams in Gegenwart eines oder mehrerer Polymere (A) durchführt, das bzw. die man in die Lösung (a), in die Mischvorrichtung aus Schritt (b) und/oder in das schmelzflüssige Lactam, das zusätzlich zu demjenigen aus (a) zugesetzt wird, einträgt.

5. Verfahren nach einem der vorhergehenden Ansprüche, bei dem man die Polymerisation des Lactams in Gegenwart eines oder mehrerer Füllstoffe durchführt, den bzw. die man in die Lösung (a), in die Mischvorrichtung aus Schritt (b) und/oder in das schmelzflüssige Lactam, das zusätzlich zu demjenigen aus (a) zugesetzt wird, einträgt.

6. Verfahren zur anionischen Polymerisation von Lactamen, bei dem man:
(a) in dem schmelzflüssigen Lactam (i) einen zur Bildung eines Lactamats befähigten Katalysator und (ii) einen unter Amiden der Formel R1-NH-CO-R2, worin R1 durch einen R3-CO-NH- oder R3-O-Rest substituiert sein kann und R1, R2, R3 für einen Aryl-, Alkyl- oder Cycloalkylrest stehen, ausgewählten Regler löst,
(a1) die Lösung aus Schritt (a) abkühlt, gegebenenfalls bis zum festen Zustand in teilbarer Form,
(a2) das Produkt aus Schritt (a1) gegebenenfalls wieder auf eine unter der Polymerisationstemperatur des Lactams liegende Temperatur erhitzt;
(a3) das Produkt aus Schritt (a1) gegebenenfalls wieder erhitzt und bei einer zwischen der Schmelztemperatur des Lactams und 15°C darüber liegenden Temperatur hält,
(b1) das Produkt aus einem der Schritte (a1), (a2) oder (a3) in eine Form einträgt und dann auf eine für die Massepolymerisation des Lactams ausreichende Temperatur erhitzt.

7. Verfahren nach Anspruch 6, bei dem man in Schritt (b1) zusätzlich zu dem Lactam aus einem der Schritte (a1), (a2) und (a3) schmelzflüssiges Lactam ohne Katalysator und ohne Regler zusetzt und dieses schmelzflüssige Lactam gegebenenfalls vor dem Eintragen in die Form in-line mit demjenigen aus einem der Schritte (a1), (a2) oder (a3) vermischt.

8. Verfahren nach Anspruch 6 oder 7, bei dem man die Polymerisation des Lactams in Gegenwart eines oder mehrerer Polymere (A) durchführt, das bzw. die man in die Lösung aus Schritt (a), in die Form, in das schmelzflüssige Lactam, das zusätzlich zu demjenigen aus einem der Schritte (a1), (a2) oder (a3) zugesetzt wird, und/oder während des in-line-Mischens des Lactams aus einem der Schritte (a1), (a2) oder (a3) und des Lactams, das zusätzlich zu demjenigen aus (a) zugesetzt wird, einträgt.

9. Verfahren nach einem der Ansprüche 6 bis 8, bei dem man die Polymerisation des Lactams in Gegenwart eines oder mehrerer Füllstoffe durchführt, den bzw. die man in die Lösung aus Schritt (a), in die Form, in das schmelzflüssige Lactam, das zusätzlich zu demjenigen aus einem der Schritte (a1), (a2) oder (a3) zugesetzt wird, und/oder während des in-line-Mischens des Lactams aus einem der Schritte (a1), (a2) oder (a3) und des Lactams, das zusätzlich zu demjenigen aus den Schritten (a1), (a2) oder (a3) zugesetzt wird, einträgt.

10. Verfahren nach einem der vorhergehenden Ansprüche, bei dem man den Katalysator unter Natrium, Kalium, Alkalimetallhydriden und -hydroxiden und Alkalimetallalkoholaten, wie Natriummethylat oder -ethylat auswählt.

11. Verfahren nach einem der vorhergehenden Ansprüche, bei dem man den Regler unter Acetanilid, Benzanilid, N-Methylacetamid, N-Ethylacetamid, N-Methylformamid, (4-Ethoxyphenyl)acetamid und Alkylenbisamiden, wie Ethylenbisstearamid (EBS) und Ethylenbisoleamid auswählt.

12. Verfahren nach einem der vorhergehenden Ansprüche, bei dem das Molverhältnis von Katalysator zu Regler zwischen 0,5 und 2 und vorzugsweise zwischen 0,8 und 1,2 liegt, wobei die Molzahl des Reglers durch die Molzahl von Amidgruppen ausgedrückt wird.

13. Verfahren nach einem der vorhergehenden Ansprüche, bei dem der Anteil an Katalysator in dem Lactam in Schritt (b1) zwischen 0,1 und 5 mol pro 100 mol Lactam und vorzugsweise zwischen 0,3 und 1,5 liegt.

14. Verfahren nach einem der vorhergehenden Ansprüche, bei dem es sich bei dem Lactam um Lauryllactam handelt, die Temperatur des Schritts (a3) zwischen 155 und 180°C und vorzugsweise zwischen 160 und 170°C liegt und die Temperatur des Schritts (b) bzw. (b1) zwischen 200 und 350°C und vorzugsweise zwischen 230 und 300°C liegt.

15. Verfahren nach einem der vorhergehenden Ansprüche, bei dem man den Katalysator ganz oder teilweise durch ein Lactamat ersetzt.

16. Lactam in fester Form,
• enthaltend (i) einen zur Bildung eines Lactamats befähigten Katalysator und (ii) einen unter Amiden der Formel R1-NH-CO-R2, worin R1 durch einen R3-CO-NH- oder R3-O-Rest substituiert sein kann und R1, R2, R3 für einen Aryl-, Alkyl- oder Cycloalkylrest stehen, ausgewählten Regler,
• wobei diese feste Form teilbar ist.

17. Lactam nach Anspruch 16, bei dem der Katalysator ganz oder teilweise durch ein Lactamat ersetzt worden ist.
